Europäisches Patentamt

European Patent Office

Office européen des brevets

(11) Publication number: **0 428 795 A1**

## (12) EUROPEAN PATENT APPLICATION

(21) Application number: **89311978.4**

(22) Date of filing: **20.11.89**

(51) Int. Cl.5: **G06F 15/68**

(43) Date of publication of application:
**29.05.91 Bulletin 91/22**

(84) Designated Contracting States:
**DE FR GB**

(71) Applicant: **MICROTEK INTERNATIONAL INC.**
**6 Industry East Road Science-Based**
**Industry Park**
**Hsinchu 30077(TW)**

Applicant: **Hsu, Wen-Hsing**
**100-27 Chien Chung Road**
**Hsinchu 30043(TW)**

(72) Inventor: **Chen,Yung-Sheng**
**83 Lin 11, Peipu Village**
**Shanwan Hsiang,Miaoli Hsien(TW)**
Inventor: **Hsu,Wen-Hsing**
**100-27,Chien Chung Road**
**Hsinchu 30043(TW)**

(74) Representative: **Skone James, Robert Edmund**
**et al**
**GILL JENNINGS & EVERY 53-64 Chancery**
**Lane**
**London WC2A 1HN(GB)**

(54) **Binary image thinning and feature extracting method and processing device thereof.**

(57) A binary image thinning and feature extracting device comprises a central processing unit (1), an image data input device (2), memories (5,6,7), and a thinning and feature extracting device (3). The thinning and feature extracting device includes a logic control circuit for controlling the thinning and feature extracting operations; and a data processing circuit for performing a thinning and feature extracting process on the binary image data in specified memories. When the data processing circuit performs thinning and feature extracting operations, data are put into a preset mask by means of parallel-sequential processing, then depending on the positional relation thereof in the mask, the data pixels are converted by using selected rules with the results from the conversion serving as the results of thinning and feature extraction.

FIG. 2

# BINARY IMAGE THINNING AND FEATURE EXTRACTING METHOD AND PROCESSING DEVICE THEREFOR

In the research and development of the fifth generation of computers, one of the major subjects is the vision of the computers which comprises image processing and pattern recognition. In pattern recognition, some pre-processing has to be performed on the input image before such recognition. In an optical character recognizing system, for example, what obtained by a camera or other optical sampling system are grey scaled data. One of the ideal practices is to have the data binary, smoothed, and thinned, and then the feature points are extracted such that the patterns can be identified according to the feature points thus obtained. In this regard, however, it takes very long time if image processing in particular, the thinning process is to be performed by using a software program. For example, the image processing for 256 * 256 dots would take more than one minute on PDP - 11 by using FORTRAN language.

The so-called thinning is to have a line of substantial width scaled down to a line having the width of only one pixel, which is an extremely time-consuming process. The image data which have been thinned are most suitable to be processed. However, if real-time processing application is required, the thinning process often is forced to be given up because of the speed consideration.

An example is the method disclosed in the Taiwan Patent No.77202868 (Matsushita Electric Industrial Co., Ltd) in which the thinning process is not used such that feature extraction must be performed on great amount of binary image data, up to 96 kinds of features having to be extracted. Consequently, it would be impossible to achieve the real-time processing results even though extremely long time is taken to compare the features with their font models.

In accordance with one aspect of the present invention, a binary image thinning and feature extracting device comprises a central processing unit, an image data input device, memories, and a thinning and feature extracting device, wherein the thinning and feature extracting device includes a logic control circuit for controlling the thinning and feature extracting operations; and a data processing circuit for performing a thinning and feature extracting process on the binary image data in specified memories; characterised in that when the data processing circuit performs thinning and feature extracting operations, data are put into a preset mask by means of parallel-sequential processing, then depending on the positional relation thereof in the mask, the data pixels are converted by using selected rules with the results from the conversion serving as the results of thinning and feature extraction.

In accordance with a second aspect of the present invention, a method of thinning and feature extracting binary image data in a system including: a central processing unit, an image data input device, memories comprising at least a first temporary memory, a second temporary memory and a third temporary memory and a thinning and feature extracting device comprises the following steps:

A. storing the image data binary in the first temporary memory and/or the second temporary memory,

B. putting the binary data into a preset mask by using a parallel-sequential processor,

C. according to the positional relation of the image data in the mask, converting the pixels by using specific rules, and

D. through the parallel-sequential processor, storing the results of the pixel conversion into the third temporary memory for image processing.

The present invention provides a method for high speed thinning and feature extraction of binary images and the processing device therefor. By using this method and processing device, thinning and feature extraction on image data can be quickly performed such that in designing the image processing system, a user does not have to give up using the thinning process because of the difficulties involved in the speed of such process thereby to substantially improve the efficiency of pattern recognition, which greatly contributes to the techniques in the field.

The present invention has wide applications in the preprocessing for high speed converters which convert originals of large size pictures to vectors, optical recognising systems for Chinese characters, and systems for identifying fingerprints.

An example of a binary image processing device and method according to the present invention will now be described with reference to the accompanying drawings, in which:-

Figure 1 is a schematic block diagram of the device;

Figure 2 is a schematic view showing the pipeline data processing means used in Figure 1; and,

Figure 3 is a schematic view showing the programmable first-in-first-out shift register used in Figure 2.

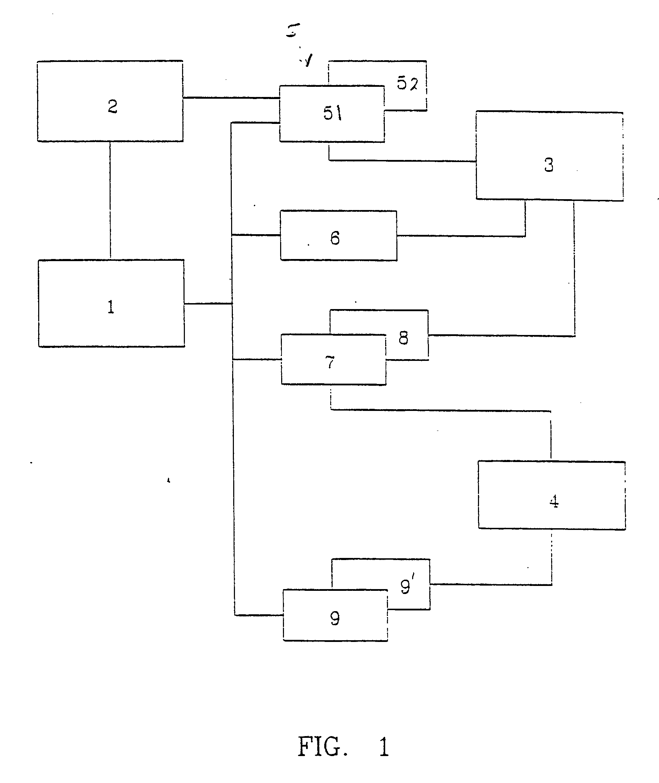

In Figure 1, there is shown a central processing unit (CPU) 1 and image input device 2 (suoh as a scanner). In operation, the CPU 1 controls the input means 2 to sequentially input the binary image data into a first temporary memory (TM1) 5, then the data are thinned first by a thinning and feature extraction processor 3. The thinning process is carried out by alternatively using two memories, ie. the first temporary memory 5 and a second temporary memory (TM2) 6. When the thinning process is complete, the data are stored in an intermediate memory (IM) 7 and then a feature extracting process is performed with the results thereof being stored in a feature memory (FM) 8. Thereafter, a short vector processor picks up short vectors from the feature memory 8 and has the results stored into a short vector memory (SVM) 9, the short vectors obtained from the short vector memory 9 are merged into long vectors to be stored in the long vector memory (LVM) 9' thereby to accomplish the function of a raster-to-vector converter.

In one embodiment of the present invention, it is suggested that two memories 51 and 52 having substantially the same memory space be used in the first temporary memory 5, allowing the two memories 51 and 52 to be used alternatively for inputting image and thinning process in order that the result of synchronized processing can be achieved more effectively.

Next, the operation of the binary image thinning and feature extraction device of the present invention will now be described in detail.

The thinning and feature extraction device3 comprises two main parts: (A) a data processing circuit and (B) a logic control circuit.

To begin with, the operation of the data processing circuit is described.

After the binary image data are placed in a selected mask (for example, 3 x 3) by the data processing circuit of the device 3 through a parallel-to-serial processor, the data are stored in a line register and, then, depending on the positional relation of the data in the mask, a thinning process will be performed on said data in the mask according to selected rules. The thinning rules are critical to the results of the process. An example of the applicable rules are shown in Table I. The Table for Thinning which is copyrighted by the inventor and incorporated herein by reference.

The data in the mask is arranged as shown below to define an eight bit binary address which accesses a memory the contents of which are defined in Table I. Appropriate offsets are applied to select those address sections commencing 0200h and 0300h.

The mask is moved one pixel at a time across the image during one pass.

TABLE I

| 3 x 3 window | 8-bit address (A0-A7) |
|---|---|
| P0 P3 P6<br>P1 P4 P7<br>P2 P5 P8 | P0 - A0<br>P1 - A1<br>P2 - A2<br>P3 - A3<br>P4 - X<br>P5 - A4<br>P6 - A5<br>P7 - A6<br>P8 - A7 |
| Note: If the data corresponding to the address is "00", then the pixel 4 can be changed or reset to "0", otherwise the pixel is not changed. Here "X" denotes don't care. | |

Table for Thinning, normal, L - R

Address A0-A7                corresponding data

| | | | | | | | | |
|---|---|---|---|---|---|---|---|---|
| 0000h | 00h | ffh | ffh | 00h | ffh | ffh | 00h | 00h |
| 0008h | ffh | 00h | 00h | 00h | ffh | ffh | ffh | 00h |
| 0010h | ffh | ffh | 00h | ffh | 00h | ffh | 00h | 00h |
| 0018h | ffh | ffh | ffh | ffh | ffh | ffh | ffh | 00h |
| 0020h | ffh | ffh | ffh | ffh | ffh | ffh | ffh | ffh |
| 0028h | 00h | 00h | ffh | 00h | ffh | ffh | ffh | 00h |
| 0030h | ffh | ffh | ffh | ffh | ffh | ffh | ffh | ffh |
| 0038h | ffh | ffh | ffh | ffh | ffh | ffh | ffh | 00h |
| 0040h | ffh | ffh | ffh | ffh | ffh | ffh | ffh | ffh |
| 0048h | 00h | 00h | ffh | ffh | ffh | ffh | ffh | ffh |
| 0050h | 00h | ffh | ffh | ffh | 00h | ffh | ffh | ffh |
| 0058h | ffh | ffh | ffh | ffh | ffh | ffh | ffh | ffh |
| 0060h | 00h | ffh | ffh | ffh | ffh | ffh | ffh | ffh |
| 0068h | 00h | 00h | ffh | 00h | ffh | ffh | ffh | 00h |
| 0070h | 00h | ffh | ffh | ffh | 00h | ffh | ffh | ffh |
| 0078h | ffh | ffh | ffh | ffh | ffh | ffh | ffh | ffh |
| 0080h | ffh | ffh | ffh | ffh | ffh | ffh | ffh | ffh |
| 0088h | ffh | ffh | ffh | ffh | ffh | ffh | ffh | ffh |
| 0090h | 00h | ffh | ffh | ffh | 00h | ffh | 00h | 00h |
| 0098h | ffh | ffh | ffh | ffh | ffh | ffh | ffh | 00h |
| 00a0h | ffh | ffh | ffh | ffh | ffh | ffh | ffh | ffh |
| 00a8h | ffh | ffh | ffh | ffh | ffh | ffh | ffh | ffh |
| 00b0h | ffh | ffh | ffh | ffh | ffh | ffh | ffh | ffh |
| 00b8h | ffh | ffh | ffh | ffh | ffh | ffh | ffh | 00h |
| 00c0h | 00h | ffh | ffh | ffh | ffh | ffh | ffh | ffh |
| 00c8h | 00h | 00h | ffh | ffh | ffh | ffh | ffh | ffh |
| 00d0h | 00h | ffh | ffh | ffh | 00h | ffh | ffh | ffh |
| 00d8h | ffh | ffh | ffh | ffh | ffh | ffh | ffh | ffh |
| 00e0h | 00h | ffh | ffh | ffh | ffh | ffh | ffh | ffh |
| 00e8h | 00h | 00h | ffh | 00h | ffh | ffh | ffh | 00h |
| 00f0h | 00h | ffh | ffh | ffh | 00h | ffh | ffh | ffh |
| 00f8h | ffh | ffh | ffh | ffh | ffh | ffh | ffh | ffh |

Table for Thinning, normal, L - R

Address A0-A7                  corresponding data

| | | | | | | | |
|---|---|---|---|---|---|---|---|
| 0100h | 00h | ffh | ffh | 00h | ffh | ffh | 00h | 00h |
| 0108h | ffh | 00h | 00h | 00h | ffh | ffh | 00h | 00h |
| 0110h | ffh | ffh | 00h | 00h | 00h | ffh | 00h | 00h |
| 0118h | ffh | ffh | ffh | ffh | ffh | ffh | ffh | ffh |
| 0120h | ffh | ffh | ffh | ffh | ffh | ffh | ffh | ffh |
| 0128h | 00h | 00h | 00h | 00h | ffh | ffh | 00h | 00h |
| 0130h | ffh | ffh | ffh | ffh | ffh | ffh | ffh | ffh |
| 0138h | ffh | ffh | ffh | ffh | ffh | ffh | ffh | ffh |
| 0140h | ffh | ffh | ffh | ffh | ffh | ffh | ffh | ffh |
| 0148h | 00h | ffh | ffh | ffh | ffh | ffh | ffh | ffh |
| 0150h | 00h | ffh | ffh | ffh | ffh | ffh | ffh | ffh |
| 0158h | ffh | ffh | ffh | ffh | ffh | ffh | ffh | ffh |
| 0160h | 00h | ffh | ffh | ffh | ffh | ffh | ffh | ffh |
| 0168h | 00h | 00h | ffh | ffh | ffh | ffh | ffh | ffh |
| 0170h | ffh | ffh | ffh | ffh | ffh | ffh | ffh | ffh |
| 0178h | ffh | ffh | ffh | ffh | ffh | ffh | ffh | ffh |
| 0180h | ffh | ffh | ffh | ffh | ffh | ffh | ffh | ffh |
| 0188h | ffh | ffh | ffh | ffh | ffh | ffh | ffh | ffh |
| 0190h | 00h | ffh | 00h | f00 | 00h | ffh | 00h | 00h |
| 0198h | ffh | ffh | ffh | ffh | ffh | ffh | ffh | ffh |
| 01a0h | ffh | ffh | ffh | ffh | ffh | ffh | ffh | ffh |
| 01a8h | ffh | ffh | ffh | ffh | ffh | ffh | ffh | ffh |
| 01b0h | ffh | ffh | ffh | ffh | ffh | ffh | ffh | ffh |
| 01b8h | ffh | ffh | ffh | ffh | ffh | ffh | ffh | ffh |
| 01c0h | 00h | ffh | ffh | ffh | ffh | ffh | ffh | ffh |
| 01c8h | ffh | ffh | ffh | ffh | ffh | ffh | ffh | ffh |
| 01d0h | 00h | ffh | ffh | ffh | 00h | ffh | 00h | 00h |
| 01d8h | ffh | ffh | ffh | ffh | ffh | ffh | ffh | ffh |
| 01e0h | 00h | ffh | ffh | ffh | ffh | ffh | ffh | ffh |
| 01e8h | 00h | 00h | ffh | ffh | ffh | ffh | ffh | ffh |
| 01f0h | 00h | ffh | ffh | ffh | 00h | ffh | 00h | 00h |
| 01f8h | 00h | 00h | ffh | ffh | 00h | 00h | ffh | ffh |

Table for Thinning, extre., L - R

Address A0-A7                    corresponding data

| 0200h | ffh ffh ffh ffh ffh ffh ffh ffh |
| 0208h | ffh ffh ffh ffh ffh ffh ffh ffh |
| 0210h | ffh ffh ffh ffh f0h ffh ffh ffh |
| 0218h | ffh ffh ffh ffh ffh ffh ffh ffh |
| 0220h | ffh ffh ffh ffh ffh ffh ffh ffh |
| 0228h | ffh ffh 00h ffh ffh ffh ffh ffh |
| 0230h | ffh ffh ffh ffh ffh ffh ffh ffh |
| 0238h | ffh ffh ffh ffh ffh ffh ffh ffh |
| 0240h | ffh ffh ffh ffh ffh ffh ffh ffh |
| 0248h | ffh 00h ffh 00h ffh ffh ffh 00h |
| 0250h | 00h ffh 00h ffh 00h ffh 00h 00h |
| 0258h | 00h ffh ffh ffh ffh ffh ffh ffh |
| 0260h | ffh ffh ffh ffh ffh ffh ffh ffh |
| 0268h | ffh ffh 00h ffh ffh ffh ffh ffh |
| 0270h | ffh ffh ffh ffh 00h ffh ffh ffh |
| 0278h | ffh ffh ffh ffh ffh ffh ffh ffh |
| 0280h | ffh ffh ffh ffh ffh ffh ffh ffh |
| 0288h | ffh ffh ffh ffh ffh ffh ffh ffh |
| 0290h | ffh ffh 00h ffh ffh ffh ffh ffh |
| 0298h | ffh ffh ffh ffh ffh ffh ffh ffh |
| 02a0h | ffh ffh ffh ffh ffh ffh ffh ffh |
| 02a8h | ffh ffh ffh ffh ffh ffh ffh ffh |
| 02b0h | ffh ffh ffh ffh ffh ffh ffh ffh |
| 02b8h | ffh ffh ffh ffh ffh ffh ffh ffh |
| 02c0h | ffh ffh ffh ffh ffh ffh ffh ffh |
| 02c8h | ffh ffh ffh ffh ffh ffh ffh ffh |
| 02d0h | ffh ffh 00h ffh ffh ffh ffh ffh |
| 02d8h | ffh ffh ffh ffh ffh ffh ffh ffh |
| 02e0h | ffh ffh ffh ffh ffh ffh ffh ffh |
| 02e8h | ffh ffh 00h ffh ffh ffh ffh ffh |
| 02f0h | ffh ffh 00h ffh ffh ffh ffh ffh |
| 02f8h | ffh ffh ffh ffh ffh ffh ffh ffh |

Table for Thinning, extra., L - R

Address A0-A7              corresponding data

```
0300h      ffh ffh ffh ffh ffh ffh ffh ffh
0308h      ffh ffh ffh ffh ffh ffh 00h ffh
0310h      ffh ffh ffh 00h ffh ffh ffh ffh
0318h      ffh ffh 00h 00h ffh ffh 00h ffh
0320h      ffh ffh ffh ffh ffh ffh ffh ffh
0328h      ffh ffh ffh ffh ffh ffh ffh ffh
0330h      ffh ffh ffh ffh ffh ffh ffh ffh
0338h      ffh ffh ffh 00h ffh ffh ffh ffh
0340h      ffh ffh ffh ffh ffh ffh ffh ffh
0348h      ffh ffh ffh ffh ffh ffh ffh 00h
0350h      ffh ffh ffh ffh ffh ffh ffh 00h
0358h      ffh ffh ffh ffh ffh ffh ffh ffh
0360h      ffh ffh ffh ffh ffh ffh ffh ffh
```

```
0368h      ffh ffh ffh ffh ffh ffh ffh ffh
0370h      00h ffh ffh ffh ffh ffh ffh ffh
0378h      00h 00h ffh ffh ffh ffh ffh ffh
0380h      ffh ffh ffh ffh ffh ffh ffh ffh
0388h      ffh ffh ffh ffh ffh ffh ffh ffh
0390h      ffh ffh ffh ffh ffh ffh ffh ffh
0398h      ffh ffh ffh ffh ffh ffh 00h ffh
03a0h      ffh ffh ffh ffh ffh ffh ffh ffh
03a8h      ffh ffh ffh ffh ffh ffh ffh ffh
03b0h      ffh ffh ffh ffh ffh ffh ffh ffh
03b8h      ffh ffh ffh ffh ffh ffh ffh ffh
03c0h      ffh ffh ffh ffh ffh ffh ffh ffh
03c8h      00h ffh ffh ffh ffh ffh ffh ffh
03d0h      ffh ffh ffh ffh ffh ffh ffh ffh
03d8h      00h ffh ffh ffh 00h ffh ffh ffh
03e0h      ffh ffh ffh ffh ffh ffh ffh ffh
03e8h      ffh ffh ffh ffh ffh ffh ffh ffh
03f0h      ffh ffh ffh ffh ffh ffh ffh ffh
03f8h      ffh ffh ffh ffh ffh ffh ffh ffh
```

000h: Then the pixel 4 will be erased.
0ffh: The pixel 4 will not be chnaged.

After the above processing, the data are processed by means of a serial-to-parallel processor and then written sequentially into the second temporary memory 6.

Preferably, the data are processed several times from left to right and then from right to left in a back and forth manner until two successive data thus obtained are identical, then the thinning operation is considered as having been completed.

When the CPU 1 instructs the circuit to extract the feature points, the circuit will process the data that are being thinned in the second temporary memory 6 in a similar step as the thinning process. That is, on one hand, the data obtained from the second memory 6 are written directly into the intermediate memory 7 and, on tne other hand, depending on the positional relation thereof in the mask, feature points are extracted according to given rules and then written into the feature point memory 8 such that short vectors are picked up by the short vector processor 4 for further processing.

As described above, the thinning rules for feature point extraction are critical to the results of the process. An example of the applicable rules are shown in Table II. The Table for Thinning Rules which is also copyrighted by the inventor(s) and incorporated herein by reference.

TABLE II

| 3 x 3 window | 8-bit address (A0-A7) |
|---|---|
| P0 P3 P6<br><br>P1 P4 P7<br><br>P2 P5 P8 | P0 - A0<br>P1 - A1<br>P2 - A2<br>P3 - A3<br>P4 - X<br>P5 - A4<br>P6 - A5<br>P7 - A6<br>P8 - A7 |
| Note: If the data corresponding to the address is "00", then the "1" pixel 4 is not a feature point, otherwise the pixel is a feature point. Here "X" denotes don't care. | |

```
        Table for Extracting Feature Point

    Address A0-A7              corresponding data

        0400h       ffh  ffh  ffh  ffh  ffh  00h  ffh  ffh
        0408h       ffh  ffh  00h  ffh  00h  00h  00h  ffh
        0410h       ffh  00h  00h  00h  ffh  00h  ffh  ffh
        0418h       00h  00h  ffh  00h  00h  00h  00h  ffh
        0420h       ffh  00h  00h  00h  00h  ffh  00h  00h
        0428h       ffh  ffh  00h  ffh  00h  00h  00h  ffh
        0430h       00h  ffh  ffh  ffh  00h  ffh  00h  00h
        0438h       00h  00h  ffh  00h  00h  00h  00h  ffh
        0440h       ffh  00h  00h  00h  00h  ffh  00h  00h
        0448h       00h  00h  ffh  00h  ffh  ffh  ffh  00h
        0450h       00h  ffh  ffh  ffh  00h  ffh  00h  00h
        0458h       ffh  ffh  ffh  ffh  ffh  ffh  ffh  00h
        0460h       ffh  00h  00h  00h  00h  ffh  00h  00h
        0468h       ffh  ffh  00h -ffh  00h  00h  00h  ffh
        0470h       00h  ffh  ffh  ffh  00h  ffh  00h  00h
```

```
0478h      00h  00h  ffh  00h  00h  00h  00h  ffh
0480h      ffh  00h  00h  00h  00h  ffh  00h  00h
0488h      00h  00h  ffh  00h  ffh  ffh  ffh  00h
0490h      ffh  00h  00h  00h  ffh  00h  ffh  ffh
0498h      00h  00h  ffh  00h  00h  00h  00h  ffh
04a0h      00h  ffh  ffh  ffh  ffh  ffh  ffh  ffh
04a8h      00h  00h  ffh  00h  ffh  ffh  ffh  00h
04b0h      00h  ffh  ffh  ffh  00h  ffh  00h  00h
04b8h      00h  00h  ffh  00h  00h  00h  00h  ffh
04c0h      ffh  00h  00h  00h  00h  ffh  00h  00h
04c8h      00h  00h  ffh  00h  ffh  ffh  ffh  00h
04d0h      ffh  ffh  ffh  ffh  ffh  ffh  ffh  ffh
04d8h      ffh  ffh  ffh  ffh  ffh  ffh  ffh  ffh
04e0h      ffh  00h  00h  00h  00h  ffh  00h  00h
04e8h      ffh  ffh  00h  ffh  00h  00h  00h  ffh
04f0h      ffh  ffh  ffh  ffh  ffh  ffh  ffh  ffh
04f8h      ffh  ffh  ffh  ffh  ffh  ffh  ffh  00h
```

```
000h  denotes  that  4  is  not  feature  point.
0ffh  denotes  that  4  is  a  feature  point.
```

The logic control circuit of the device 3 controls the entire thinning and feature extracting operation. Since a considerable amount of data are to be processed by the present invention, it is preferable that a clock of higher frequency (for example, 10 MHz) is used to speed the data processing.

A new method for data processing is also provided which has the advantage of fast, correct and more flexible data processing, the method comprising the steps of:

A. Pipeline processing of the system;

B. Sectioning and overlapping of the image; and

C. using programmable first-in-first-out shift registers for two parallel memories.

The above steps will be described, respectively, hereinafter:

A. Pipeline processing of the system:

In the present invention, since two memories are used alternatively, when the thinning process is being performed on an image block i-1, the input device (such as a scanner) at the same time takes in the image from the image block i to be processed in the next step. When thinning of the image block i-1 is completed, thinning process can be performed immediately on the next image block i and, at the same time, the input device continues to take in the image from the second next image block i + 1. Since the thinning process is performed in the pipeline processing manner, there are no waiting intervals such that the speed is increased.

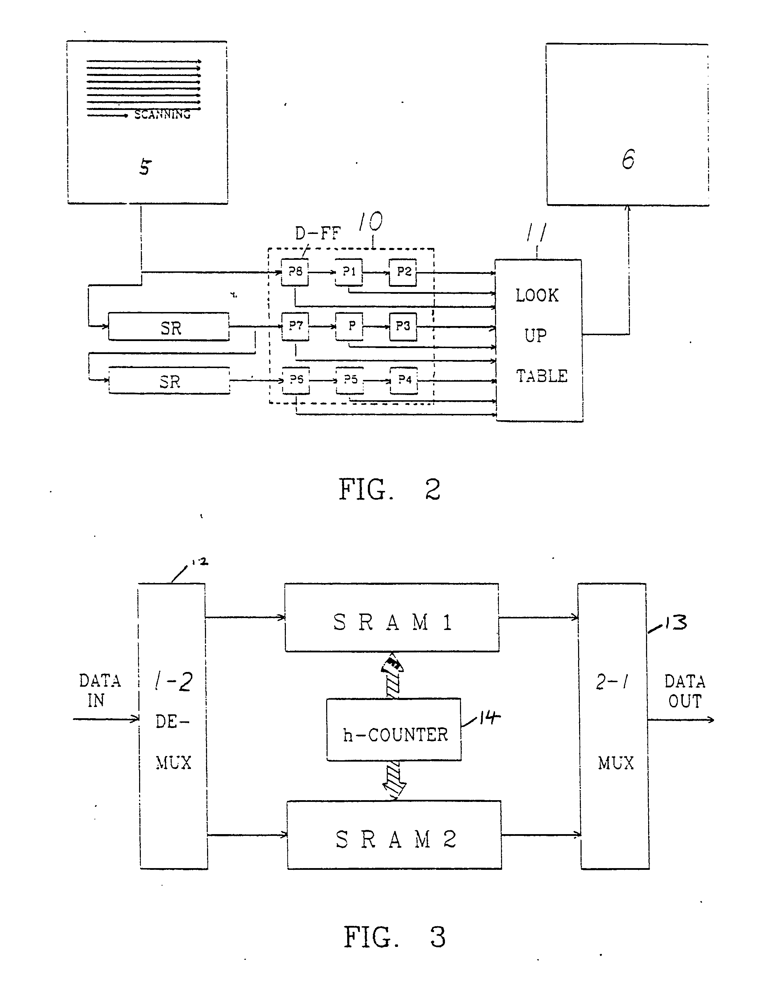

Fig. 2 shows a pipeline data processing device of an embodiment of the present invention, wherein 5 represents the first temporary memory, 6 represents the second temporary memory, the area in phantom line designated by the numeral 10 represents the data processing mask which in this example has dimensions of 3 x 3, and 11 represents the memories for recording the tables for thinning rules. It should be noted that elements 10, 11 are constituted by the device 3 in Figure 1.

B. Sectioning and overlapping of the image:

Because of the relatively large dimensions of the e - size pictures, if the image data of an entire picture are input into the memories, a considerable memory space would be required. In order to adjust the relation between the processing speed and the memory space (the cost) so as to achieve the result that a great number of data can be processed at high speed, processing is performed by having the picture cutting horizontally into the shape of elongate strips (referred to as the image blocks).

With horizontal cutting, in addition to reducing the required memory space, since the processed picture will exhibit a retreating phenomenon during the repeated process of thinning, in order to retain the continuity of the vectors extracted from the forward image block and those from the rearward block, it is provided that, during the process, there must be overlapped portions for the two adjacent image blocks, which can be, for example, double the line width of the picture as shown in the following drawing, such that continous picture data can be obtained according to the comparison and analysis of the data in the overlapped portions.

By means of the above process in combination with the image-taking speed of the input device such as a scanner and the thinning speed, data are input in sections (if the data are scanned by a scanner, the number of the lines to be scanned and the number of those to be overlapped will be set first according to the scanning sequence) such that, after thinning highly accurate vector data may be produced through a short vcctor generator.

```
        next data block
        to be processed     overlapped
                            portions     data block being
                                         presently
                                         processed
```

C. Designing the programmable FIFO shift register for the two parallel memories:

When local operation is carried out with the image processing system suitable for the present invention (as shown in Fig. 1), typical commercialized shift registers currently available having a set shift length for the input device which is controlled thereby such that they are suitable only for a particular image input device. In the image processor of the present example, each shift register (SR) in Figure 2 is designed to be programmable. The present processor is, therefore, suitable for scanners of various sizes and processing areas.

The two programmable first-in-first-out shift registers shown in Figure 2 are substantially as shown in Fig. 3. When the SRAM 1 writes data in from a multiplexer 12, the SRAM 2 reads data out to a multiplexer 13; conversely, when the SRAM 1 reads data out, the SRAM 2 writes data in. During these read and write operations, the memory addresses of the present read/write are assigned by an h-counter 14. Since this h-counter 14 is programmable, based on this property, the highest count of the counter is set as the length the data can be shifted (that is, the number of pixels which are scanned horizontally by the scanner). As a result, the user can thus set the highest count for the h-counter 14, thereby to change the length for the shift register so as to accommodate input devices of different sizes and the areas of the pictures to be processed, thus to obtain a higher flexibility.

From the foregoing, by means of the particular method and device described, thinning preprocessing can be readily performed on picture data to obtain correct results. In addition, the present invention is suitable for input devices of different specifications, thus having high utilization value in industrial production.

**Claims**

1. A binary image thinning and feature extracting device comprising: a central processing unit (1), an image data input device (2), memories (5,6,7) and a thinning and feature extracting device (3), wherein the thinning and feature extracting device includes:
a logic control circuit for controlling the thinning and feature extracting operations; and
a data processing circuit for performing a thinning and feature extracting process on the binary image data in specified memories;
characterized in that when the data processing circuit performs thinning and feature extracting operations, data are put into a preset mask by means of parallel-sequential processing, then depending on the positional relation thereof in the mask, the data pixels are converted by using selected rules with the results from the conversion serving as the results of thinning and feature extraction.
2. A device according to claim 1, wherein the mask is a 3 x 3 pixel array.
3. A device according to claim 2, wherein the thinning rules include the following Tables:

| 3 x 3 window | 8-bit address (A0-A7) |
|---|---|
| P0 P3 P6<br><br>P1 P4 P7<br><br>P2 P5 P8 | P0 - A0<br>P1 - A1<br>P2 - A2<br>P3 - A3<br>P4 - X<br>P5 - A4<br>P6 - A5<br>P7 - A6<br>P8 - A7 |
| Note: If the data corresponding to the address is "00", then the pixel 4 can be changed or reset to "0", otherwise the pixel is not changed. Here "X" denotes don't care. | |

Table for Thinning, normal, L - R

Address A0-A7                corresponding data

| | | | | | | | |
|---|---|---|---|---|---|---|---|
| 0000h | 00h | ffh | ffh | 00h | ffh | ffh | 00h | 00h |
| 0008h | ffh | 00h | 00h | 00h | ffh | ffh | ffh | 00h |
| 0010h | ffh | ffh | 00h | ffh | 00h | ffh | 00h | 00h |
| 0018h | ffh | ffh | ffh | ffh | ffh | ffh | ffh | 00h |
| 0020h | ffh | ffh | ffh | ffh | ffh | ffh | ffh | ffh |
| 0028h | 00h | 00h | ffh | 00h | ffh | ffh | ffh | 00h |
| 0030h | ffh | ffh | ffh | ffh | ffh | ffh | ffh | ffh |
| 0038h | ffh | ffh | ffh | ffh | ffh | ffh | ffh | 00h |
| 0040h | ffh | ffh | ffh | ffh | ffh | ffh | ffh | ffh |
| 0048h | 00h | 00h | ffh | ffh | ffh | ffh | ffh | ffh |
| 0050h | 00h | ffh | ffh | ffh | 00h | ffh | ffh | ffh |
| 0058h | ffh | ffh | ffh | ffh | ffh | ffh | ffh | ffh |
| 0060h | 00h | ffh | ffh | ffh | ffh | ffh | ffh | ffh |
| 0068h | 00h | 00h | ffh | 00h | ffh | ffh | ffh | 00h |
| 0070h | 00h | ffh | ffh | ffh | 00h | ffh | ffh | ffh |
| 0078h | ffh | ffh | ffh | ffh | ffh | ffh | ffh | ffh |
| 0080h | ffh | ffh | ffh | ffh | ffh | ffh | ffh | ffh |
| 0088h | ffh | ffh | ffh | ffh | ffh | ffh | ffh | ffh |
| 0090h | 00h | ffh | ffh | ffh | 00h | ffh | 00h | 00h |
| 0098h | ffh | ffh | ffh | ffh | ffh | ffh | ffh | 00h |
| 00a0h | ffh | ffh | ffh | ffh | ffh | ffh | ffh | ffh |
| 00a8h | ffh | ffh | ffh | ffh | ffh | ffh | ffh | ffh |
| 00b0h | ffh | ffh | ffh | ffh | ffh | ffh | ffh | ffh |
| 00b8h | ffh | ffh | ffh | ffh | ffh | ffh | ffh | 00h |
| 00c0h | 00h | ffh | ffh | ffh | ffh | ffh | ffh | ffh |
| 00c8h | 00h | 00h | ffh | ffh | ffh | ffh | ffh | ffh |
| 00d0h | 00h | ffh | ffh | ffh | 00h | ffh | ffh | ffh |
| 00d8h | ffh | ffh | ffh | ffh | ffh | ffh | ffh | ffh |
| 00e0h | 00h | ffh | ffh | ffh | ffh | ffh | ffh | ffh |
| 00e8h | 00h | 00h | ffh | 00h | ffh | ffh | ffh | 00h |
| 00f0h | 00h | ffh | ffh | ffh | 00h | ffh | ffh | ffh |
| 00f8h | ffh | ffh | ffh | ffh | ffh | ffh | ffh | ffh |

Table for Thinning, normal, L - R

Address A0-A7                  corresponding data

| | | | | | | | |
|---|---|---|---|---|---|---|---|
| 0100h | 00h | ffh | ffh | 00h | ffh | ffh | 00h | 00h |
| 0108h | ffh | 00h | 00h | 00h | ffh | ffh | 00h | 00h |
| 0110h | ffh | ffh | 00h | 00h | 00h | ffh | 00h | 00h |
| 0118h | ffh | ffh | ffh | ffh | ffh | ffh | ffh | ffh |
| 0120h | ffh | ffh | ffh | ffh | ffh | ffh | ffh | ffh |
| 0128h | 00h | 00h | 00h | 00h | ffh | ffh | 00h | 00h |
| 0130h | ffh | ffh | ffh | ffh | ffh | ffh | ffh | ffh |
| 0138h | ffh | ffh | ffh | ffh | ffh | ffh | ffh | ffh |
| 0140h | ffh | ffh | ffh | ffh | ffh | ffh | ffh | ffh |
| 0148h | 00h | ffh | ffh | ffh | ffh | ffh | ffh | ffh |
| 0150h | 00h | ffh | ffh | ffh | ffh | ffh | ffh | ffh |
| 0158h | ffh | ffh | ffh | ffh | ffh | ffh | ffh | ffh |
| 0160h | 00h | ffh | ffh | ffh | ffh | ffh | ffh | ffh |
| 0168h | 00h | 00h | ffh | ffh | ffh | ffh | ffh | ffh |
| 0170h | ffh | ffh | ffh | ffh | ffh | ffh | ffh | ffh |
| 0178h | ffh | ffh | ffh | ffh | ffh | ffh | ffh | ffh |
| 0180h | ffh | ffh | ffh | ffh | ffh | ffh | ffh | ffh |
| 0188h | ffh | ffh | ffh | ffh | ffh | ffh | ffh | ffh |
| 0190h | 00h | ffh | 00h | f00 | 00h | ffh | 00h | 00h |
| 0198h | ffh | ffh | ffh | ffh | ffh | ffh | ffh | ffh |
| 01a0h | ffh | ffh | ffh | ffh | ffh | ffh | ffh | ffh |
| 01a8h | ffh | ffh | ffh | ffh | ffh | ffh | ffh | ffh |
| 01b0h | ffh | ffh | ffh | ffh | ffh | ffh | ffh | ffh |
| 01b8h | ffh | ffh | ffh | ffh | ffh | ffh | ffh | ffh |
| 01c0h | 00h | ffh | ffh | ffh | ffh | ffh | ffh | ffh |
| 01c8h | ffh | ffh | ffh | ffh | ffh | ffh | ffh | ffh |
| 01d0h | 00h | ffh | ffh | ffh | 00h | ffh | 00h | 00h |
| 01d8h | ffh | ffh | ffh | ffh | ffh | ffh | ffh | ffh |
| 01e0h | 00h | ffh | ffh | ffh | ffh | ffh | ffh | ffh |
| 01e8h | 00h | 00h | ffh | ffh | ffh | ffh | ffh | ffh |
| 01f0h | 00h | ffh | ffh | ffh | 00h | ffh | 00h | 00h |
| 01f8h | 00h | 00h | ffh | ffh | 00h | 00h | ffh | ffh |

Table for Thinning, extre., L - R

Address A0-A7                corresponding data
         0200h     ffh ffh ffh ffh ffh ffh ffh ffh
         0208h     ffh ffh ffh ffh ffh ffh ffh ffh
         0210h     ffh ffh ffh ffh f0h ffh ffh ffh
         0218h     ffh ffh ffh ffh ffh ffh ffh ffh
         0220h     ffh ffh ffh ffh ffh ffh ffh ffh
         0228h     ffh ffh 00h ffh ffh ffh ffh ffh
         0230h     ffh ffh ffh ffh ffh ffh ffh ffh
         0238h     ffh ffh ffh ffh ffh ffh ffh ffh
         0240h     ffh ffh ffh ffh ffh ffh ffh ffh
         0248h     ffh 00h ffh 00h ffh ffh ffh 00h
         0250h     00h ffh 00h ffh 00h ffh 00h 00h
         0258h     00h ffh ffh ffh ffh ffh ffh ffh
         0260h     ffh ffh ffh ffh ffh ffh ffh ffh


         0268h     ffh ffh 00h ffh ffh ffh ffh ffh
         0270h     ffh ffh ffh ffh 00h ffh ffh ffh
         0278h     ffh ffh ffh ffh ffh ffh ffh ffh
         0280h     ffh ffh ffh ffh ffh ffh ffh ffh
         0288h     ffh ffh ffh ffh ffh ffh ffh ffh
         0290h     ffh ffh 00h ffh ffh ffh ffh ffh
         0298h     ffh ffh ffh ffh ffh ffh ffh ffh
         02a0h     ffh ffh ffh ffh ffh ffh ffh ffh
         02a8h     ffh ffh ffh ffh ffh ffh ffh ffh
         02b0h     ffh ffh ffh ffh ffh ffh ffh ffh
         02b8h     ffh ffh ffh ffh ffh ffh ffh ffh
         02c0h     ffh ffh ffh ffh ffh ffh ffh ffh
         02c8h     ffh ffh ffh ffh ffh ffh ffh ffh
         02d0h     ffh ffh 00h ffh ffh ffh ffh ffh
         02d8h     ffh ffh ffh ffh ffh ffh ffh ffh
         02e0h     ffh ffh ffh ffh ffh ffh ffh ffh
         02e8h     ffh ffh 00h ffh ffh ffh ffh ffh
         02f0h     ffh ffh 00h ffh ffh ffh ffh ffh
         02f8h     ffh ffh ffh ffh ffh ffh ffh ffh

Table for Thinning, extra., L - R

Address A0-A7                          corresponding data

```
0300h    ffh ffh ffh ffh ffh ffh ffh ffh
0308h    ffh ffh ffh ffh ffh ffh 00h ffh
0310h    ffh ffh ffh 00h ffh ffh ffh ffh
0318h    ffh ffh 00h 00h ffh ffh 00h ffh
0320h    ffh ffh ffh ffh ffh ffh ffh ffh
0328h    ffh ffh ffh ffh ffh ffh ffh ffh
0330h    ffh ffh ffh ffh ffh ffh ffh ffh
0338h    ffh ffh ffh 00h ffh ffh ffh ffh
0340h    ffh ffh ffh ffh ffh ffh ffh ffh
0348h    ffh ffh ffh ffh ffh ffh ffh 00h
0350h    ffh ffh ffh ffh ffh ffh ffh 00h
0358h    ffh ffh ffh ffh ffh ffh ffh ffh
0360h    ffh ffh ffh ffh ffh ffh ffh ffh
0368h    ffh ffh ffh ffh ffh ffh ffh ffh
0370h    00h ffh ffh ffh ffh ffh ffh ffh
0378h    00h 00h ffh ffh ffh ffh ffh ffh
0380h    ffh ffh ffh ffh ffh ffh ffh ffh
0388h    ffh ffh ffh ffh ffh ffh ffh ffh
0390h    ffh ffh ffh ffh ffh ffh ffh ffh
0398h    ffh ffh ffh ffh ffh ffh 00h ffh
03a0h    ffh ffh ffh ffh ffh ffh ffh ffh
03a8h    ffh ffh ffh ffh ffh ffh ffh ffh
03b0h    ffh ffh ffh ffh ffh ffh ffh ffh
03b8h    ffh ffh ffh ffh ffh ffh ffh ffh
03c0h    ffh ffh ffh ffh ffh ffh ffh ffh
03c8h    00h ffh ffh ffh ffh ffh ffh ffh
03d0h    ffh ffh ffh ffh ffh ffh ffh ffh
03d8h    00h ffh ffh ffh 00h ffh ffh ffh
03e0h    ffh ffh ffh ffh ffh ffh ffh ffh
03e8h    ffh ffh ffh ffh ffh ffh ffh ffh
```

```
03f0h    ffh ffh ffh ffh ffh ffh ffh ffh
03f8h    ffh ffh ffh ffh ffh ffh ffh ffh
```

00h: Then the pixel 4 will be erased.
0ffh: The pixel 4 will not be chnaged.

4. A device according to any of the preceding claims, wherein the thinning device is performed in a back and forth manner until two successive data thus obtained are identical.

5. A device according to at least claim 2, wherein the thinning rules include the following table:

| 3 x 3 window | 8-bit address (A0-A7) |
|---|---|
| P0 P3 P6<br><br>P1 P4 P7<br><br>P2 P5 P8 | P0 - A0<br>P1 - A1<br>P2 - A2<br>P3 - A3<br>P4 - X<br>P5 - A4<br>P6 - A5<br>P7 - A6<br>P8 - A7 |
| Note: If the data corresponding to the address is "00", then the "1" pixel 4 is not a feature point, otherwise the pixel is a feature point. Here "X" denotes don't care. | |

```
        Table for Extracting Feature Point

Address A0-A7              corresponding data

        0400h     ffh ffh ffh ffh ffh 00h ffh ffh
        0408h     ffh ffh 00h ffh 00h 00h 00h ffh
        0410h     ffh 00h 00h 00h ffh 00h ffh ffh
        0418h     00h 00h ffh 00h 00h 00h 00h ffh
        0420h     ffh 00h 00h 00h 00h ffh 00h 00h
        0428h     ffh ffh 00h ffh 00h 00h 00h ffh
        0430h     00h ffh ffh ffh 00h ffh 00h 00h
        0438h     00h 00h ffh 00h 00h 00h 00h ffh
        0440h     ffh 00h 00h 00h 00h ffh 00h 00h
        0448h     00h 00h ffh 00h ffh ffh ffh 00h
        0450h     00h ffh ffh ffh 00h ffh 00h 00h
                                  .
```

```
0458h    ffh ffh ffh ffh ffh ffh ffh 00h
0460h    ffh 00h 00h 00h 00h ffh 00h 00h
0468h    ffh ffh 00h ffh 00h 00h 00h ffh
0470h    00h ffh ffh ffh 00h ffh 00h 00h
0478h    00h 00h ffh 00h 00h 00h 00h ffh
0480h    ffh 00h 00h 00h 00h ffh 00h 00h
0488h    00h 00h ffh 00h ffh ffh ffh 00h
0490h    ffh 00h 00h 00h ffh 00h ffh ffh
0498h    00h 00h ffh 00h 00h 00h 00h ffh
04a0h    00h ffh ffh ffh ffh ffh ffh ffh
04a8h    00h 00h ffh 00h ffh ffh ffh 00h
04b0h    00h ffh ffh ffh 00h ffh 00h 00h
04b8h    00h 00h ffh 00h 00h 00h 00h ffh
04c0h    ffh 00h 00h 00h 00h ffh 00h 00h
04c8h    00h 00h ffh 00h ffh ffh ffh 00h
04d0h    ffh ffh ffh ffh ffh ffh ffh ffh
04d8h    ffh ffh ffh ffh ffh ffh ffh ffh
04e0h    ffh 00h 00h 00h 00h ffh 00h 00h
04e8h    ffh ffh 00h ffh 00h 00h 00h ffh
04f0h    ffh ffh ffh ffh ffh ffh ffh ffh
04f8h    ffh ffh ffh ffh ffh ffh ffh 00h
```

```
00h denotes that 4 is not feature point.
0ffh denotes that 4 is a feature point.
```

6. A device according to any of the preceding claims, wherein the feature extracting operation is performed in a back and forth manner until successive data thus obtained are identical.

7. A device according to any of the preceding claims, wherein the memories comprise at least a first temporary memory (5) and a second temporary memory (6) such that when the system processes the data in the first temporary memory (5), the data input from the input device (2) can be stored into the second temporary memory (6).

8. A device according to any of the preceding claims, wherein when the input device (2) performs input operations, the input picture data are divided into a plurality of blocks to be processed, respectively, any two adjacent blocks being overlapped relative to each other, such that the thinning result can be corrected according to the data obtained from the overlapped portions.

9. A device according to any of the preceding claims, wherein one of the memories (5) is connected to the thinning and feature extraction device (3) by a programmable first-in-first-out register (SR).

10. A device according to claim 9, wherein the first-in-first-out register (SR) includes an h-counter (14).

11. A method for thinning and feature extracting binary image data in a system including: a central processing unit (1), an image data input device (2), memories comprising at least a first temporary memory (5), a second temporary memory (6) and a third temporary memory (7) and a thinning and feature extracting device (3) by means of the following steps:

A. storing the image data binary in the first temporary memory (5) and/or the second temporary memory (6);

B. putting the binary data into a preset mask by using a parallel-sequential processor,

C. according to the positional relation of the image data in the mask, coverting the pixels by using specific rules, and

D. through the parallel-sequential processor, storing the results of the pixel conversion into the third temporary memory (7) for image processing.

12. A method according to claim 11, wherein the mask is a 3 x 3 pixel array.

13. A method as Claim 12, wherein the thinning rules include the following Tables:

| 3 x 3 window | 8-bit address (A0-A7) |
|---|---|
| P0 P3 P6<br><br>P1 P4 P7<br><br>P2 P5 P8 | P0 - A0<br>P1 - A1<br>P2 - A2<br>P3 - A3<br>P4 - X<br>P5 - A4<br>P6 - A5<br>P7 - A6<br>P8 - A7 |
| Note: If the data corresponding to the address is "00", then the pixel 4 can be changed or reset to "0", otherwise the pixel is not changed. Here "X" denotes don't care. | |

```
            Table for Thinning, normal, L - R

    Address A0-A7                 corresponding data

              0000h        00h ffh ffh 00h ffh ffh 00h 00h
              0008h        ffh 00h 00h 00h ffh ffh ffh 00h
              0010h        ffh ffh 00h ffh 00h ffh 00h 00h
              0018h        ffh ffh ffh ffh ffh ffh ffh 00h
              0020h        ffh ffh ffh ffh ffh ffh ffh ffh
              0028h        00h 00h ffh 00h ffh ffh ffh 00h
              0030h        ffh ffh ffh ffh ffh ffh ffh ffh
              0038h        ffh ffh ffh ffh ffh ffh ffh 00h
              0040h        ffh ffh ffh ffh ffh ffh ffh ffh
              0048h        00h 00h ffh ffh ffh ffh ffh ffh
              0050h        00h ffh ffh ffh 00h ffh ffh ffh
              0058h        ffh ffh ffh ffh ffh ffh ffh ffh
              0060h        00h ffh ffh ffh ffh ffh ffh ffh
              0068h        00h 00h ffh 00h ffh ffh ffh 00h
              0070h        00h ffh ffh ffh 00h ffh ffh ffh
              0078h        ffh ffh ffh ffh ffh ffh ffh ffh
              0080h        ffh ffh ffh ffh ffh ffh ffh ffh
              0088h        ffh ffh ffh ffh ffh ffh ffh ffh
              0090h        00h ffh ffh ffh 00h ffh 00h 00h
              0098h        ffh ffh ffh ffh ffh ffh ffh 00h
              00a0h        ffh ffh ffh ffh ffh ffh ffh ffh
              00a8h        ffh ffh ffh ffh ffh ffh ffh ffh
              00b0h        ffh ffh ffh ffh ffh ffh ffh ffh
              00b8h        ffh ffh ffh ffh ffh ffh ffh 00h
              00c0h        00h ffh ffh ffh ffh ffh ffh ffh
              00c8h        00h 00h ffh ffh ffh ffh ffh ffh
              00d0h        00h ffh ffh ffh 00h ffh ffh ffh
```

```
00d8h     ffh ffh ffh ffh ffh ffh ffh ffh
00e0h     00h ffh ffh ffh ffh ffh ffh ffh
00e8h     00h 00h ffh 00h ffh ffh ffh 00h
00f0h     00h ffh ffh ffh 00h ffh ffh ffh
00f8h     ffh ffh ffh ffh ffh ffh ffh ffh
```

Table for Thinning, normal, L - R

Address A0-A7              corresponding data

```
0100h     00h ffh ffh 00h ffh ffh 00h 00h
0108h     ffh 00h 00h 00h ffh ffh 00h 00h
0110h     ffh ffh 00h 00h 00h ffh 00h 00h
0118h     ffh ffh ffh ffh ffh ffh ffh ffh
0120h     ffh ffh ffh ffh ffh ffh ffh ffh
0128h     00h 00h 00h 00h ffh ffh 00h 00h
0130h     ffh ffh ffh ffh ffh ffh ffh ffh
0138h     ffh ffh ffh ffh ffh ffh ffh ffh
0140h     ffh ffh ffh ffh ffh ffh ffh ffh
0148h     00h ffh ffh ffh ffh ffh ffh ffh
0150h     00h ffh ffh ffh ffh ffh ffh ffh
0158h     ffh ffh ffh ffh ffh ffh ffh ffh
0160h     00h ffh ffh ffh ffh ffh ffh ffh
0168h     00h 00h ffh ffh ffh ffh ffh ffh
0170h     ffh ffh ffh ffh ffh ffh ffh ffh
0178h     ffh ffh ffh ffh ffh ffh ffh ffh
0180h     ffh ffh ffh ffh ffh ffh ffh ffh
0188h     ffh ffh ffh ffh ffh ffh ffh ffh
0190h     00h ffh 00h f00 00h ffh 00h 00h
0198h     ffh ffh ffh ffh ffh ffh ffh ffh
01a0h     ffh ffh ffh ffh ffh ffh ffh ffh
01a8h     ffh ffh ffh ffh ffh ffh ffh ffh
01b0h     ffh ffh ffh ffh ffh ffh ffh ffh
01b8h     ffh ffh ffh ffh ffh ffh ffh ffh
01c0h     00h ffh ffh ffh ffh ffh ffh ffh
01c8h     ffh ffh ffh ffh ffh ffh ffh ffh
01d0h     00h ffh ffh ffh 00h ffh 00h 00h
01d8h     ffh ffh ffh ffh ffh ffh ffh ffh
01e0h     00h ffh ffh ffh ffh ffh ffh ffh
01e8h     00h 00h ffh ffh ffh ffh ffh ffh
01f0h     00h ffh ffh ffh 00h ffh 00h 00h
01f8h     00h 00h ffh ffh 00h 00h ffh ffh
```

Table for Thinning, extre., L - R

Address A0-A7                corresponding data

```
0200h      ffh ffh ffh ffh ffh ffh ffh ffh
0208h      ffh ffh ffh ffh ffh ffh ffh ffh
0210h      ffh ffh ffh ffh f0h ffh ffh ffh
0218h      ffh ffh ffh ffh ffh ffh ffh ffh
0220h      ffh ffh ffh ffh ffh ffh ffh ffh
0228h      ffh ffh 00h ffh ffh ffh ffh ffh
```

```
0230h      ffh ffh ffh ffh ffh ffh ffh ffh
0238h      ffh ffh ffh ffh ffh ffh ffh ffh
0240h      ffh ffh ffh ffh ffh ffh ffh ffh
0248h      ffh 00h ffh 00h ffh ffh ffh 00h
0250h      00h ffh 00h ffh 00h ffh 00h 00h
0258h      00h ffh ffh ffh ffh ffh ffh ffh
0260h      ffh ffh ffh ffh ffh ffh ffh ffh
0268h      ffh ffh 00h ffh ffh ffh ffh ffh
0270h      ffh ffh ffh ffh 00h ffh ffh ffh
0278h      ffh ffh ffh ffh ffh ffh ffh ffh
0280h      ffh ffh ffh ffh ffh ffh ffh ffh
0288h      ffh ffh ffh ffh ffh ffh ffh ffh
0290h      ffh ffh 00h ffh ffh ffh ffh ffh
0298h      ffh ffh ffh ffh ffh ffh ffh ffh
02a0h      ffh ffh ffh ffh ffh ffh ffh ffh
02a8h      ffh ffh ffh ffh ffh ffh ffh ffh
02b0h      ffh ffh ffh ffh ffh ffh ffh ffh
02b8h      ffh ffh ffh ffh ffh ffh ffh ffh
02c0h      ffh ffh ffh ffh ffh ffh ffh ffh
02c8h      ffh ffh ffh ffh ffh ffh ffh ffh
02d0h      ffh ffh 00h ffh ffh ffh ffh ffh
02d8h      ffh ffh ffh ffh ffh ffh ffh ffh
02e0h      ffh ffh ffh ffh ffh ffh ffh ffh
02e8h      ffh ffh 00h ffh ffh ffh ffh ffh
02f0h      ffh ffh 00h ffh ffh ffh ffh ffh
02f8h      ffh ffh ffh ffh ffh ffh ffh ffh
```

Table for Thinning, extra., L - R

Address A0-A7                  corresponding data

| | | | | | | | | |
|---|---|---|---|---|---|---|---|---|
| 0300h | ffh | ffh | ffh | ffh | ffh | ffh | ffh | ffh |
| 0308h | ffh | ffh | ffh | ffh | ffh | ffh | 00h | ffh |
| 0310h | ffh | ffh | ffh | 00h | ffh | ffh | ffh | ffh |
| 0318h | ffh | ffh | 00h | 00h | ffh | ffh | 00h | ffh |
| 0320h | ffh | ffh | ffh | ffh | ffh | ffh | ffh | ffh |
| 0328h | ffh | ffh | ffh | ffh | ffh | ffh | ffh | ffh |
| 0330h | ffh | ffh | ffh | ffh | ffh | ffh | ffh | ffh |
| 0338h | ffh | ffh | ffh | 00h | ffh | ffh | ffh | ffh |
| 0340h | ffh | ffh | ffh | ffh | ffh | ffh | ffh | ffh |
| 0348h | ffh | ffh | ffh | ffh | ffh | ffh | ffh | 00h |
| 0350h | ffh | ffh | ffh | ffh | ffh | ffh | ffh | 00h |
| 0358h | ffh | ffh | ffh | ffh | ffh | ffh | ffh | ffh |
| 0360h | ffh | ffh | ffh | ffh | ffh | ffh | ffh | ffh |
| 0368h | ffh | ffh | ffh | ffh | ffh | ffh | ffh | ffh |
| 0370h | 00h | ffh | ffh | ffh | ffh | ffh | ffh | ffh |
| 0378h | 00h | 00h | ffh | ffh | ffh | ffh | ffh | ffh |
| 0380h | ffh | ffh | ffh | ffh | ffh | ffh | ffh | ffh |
| 0388h | ffh | ffh | ffh | ffh | ffh | ffh | ffh | ffh |
| 0390h | ffh | ffh | ffh | ffh | ffh | ffh | ffh | ffh |
| 0398h | ffh | ffh | ffh | ffh | ffh | ffh | 00h | ffh |
| 03a0h | ffh | ffh | ffh | ffh | ffh | ffh | ffh | ffh |
| 03a8h | ffh | ffh | ffh | ffh | ffh | ffh | ffh | ffh |
| 03b0h | ffh | ffh | ffh | ffh | ffh | ffh | ffh | ffh |
| | | | | | | | | |
| 03b8h | ffh | ffh | ffh | ffh | ffh | ffh | ffh | ffh |
| 03c0h | ffh | ffh | ffh | ffh | ffh | ffh | ffh | ffh |
| 03c8h | 00h | ffh | ffh | ffh | ffh | ffh | ffh | ffh |
| 03d0h | ffh | ffh | ffh | ffh | ffh | ffh | ffh | ffh |
| 03d8h | 00h | ffh | ffh | ffh | 00h | ffh | ffh | ffh |
| 03e0h | ffh | ffh | ffh | ffh | ffh | ffh | ffh | ffh |
| 03e8h | ffh | ffh | ffh | ffh | ffh | ffh | ffh | ffh |
| 03f0h | ffh | ffh | ffh | ffh | ffh | ffh | ffh | ffh |
| 03f8h | ffh | ffh | ffh | ffh | ffh | ffh | ffh | ffh |

000h: Then the pixel 4 will be erased.
0ffh: The pixel 4 will not be chnaged.

14. A method according to any of claims 11 to 13, wherein the thinning operation is performed in a back and forth manner until two successive data thus obtained are identical.

15. A method according to any of claims 11 to 14, wherein the thinning rules include the following table:

21

| 3 x 3 window | 8-bit address (A0-A7) |
|---|---|
| P0 P3 P6<br><br>P1 P4 P7<br><br>P2 P5 P8 | P0 - A0<br>P1 - A1<br>P2 - A2<br>P3 - A3<br>P4 - X<br>P5 - A4<br>P6 - A5<br>P7 - A6<br>P8 - A7 |
| Note: If the data corresponding to the address is "00", then the "1" pixel 4 is not a feature point, otherwise the pixel is a feature point. Here "X" denotes don't care. | |

Table for Extracting Feature Point

Address A0-A7                    corresponding data

0400h       ffh ffh ffh ffh ffh 00h ffh ffh
0408h       ffh ffh 00h ffh 00h 00h 00h ffh
0410h       ffh 00h 00h 00h ffh 00h ffh ffh
0418h       00h 00h ffh 00h 00h 00h 00h ffh

22

```
0420h    ffh  00h  00h  00h  00h  ffh  00h  00h
0428h    ffh  ffh  00h  ffh  00h  00h  00h  ffh
0430h    00h  ffh  ffh  ffh  00h  ffh  00h  00h
0438h    00h  00h  ffh  00h  00h  00h  00h  ffh
0440h    ffh  00h  00h  00h  00h  ffh  00h  00h
0448h    00h  00h  ffh  00h  ffh  ffh  ffh  00h
0450h    00h  ffh  ffh  ffh  00h  ffh  00h  00h
0458h    ffh  ffh  ffh  ffh  ffh  ffh  ffh  00h
0460h    ffh  00h  00h  00h  00h  ffh  00h  00h
0468h    ffh  ffh  00h  ffh  00h  00h  00h  ffh
0470h    00h  ffh  ffh  ffh  00h  ffh  00h  00h
0478h    00h  00h  ffh  00h  00h  00h  00h  ffh
0480h    ffh  00h  00h  00h  00h  ffh  00h  00h
0488h    00h  00h  ffh  00h  ffh  ffh  ffh  00h
0490h    ffh  00h  00h  00h  ffh  00h  ffh  ffh
0498h    00h  00h  ffh  00h  00h  00h  00h  ffh
04a0h    00h  ffh  ffh  ffh  ffh  ffh  ffh  ffh
04a8h    00h  00h  ffh  00h  ffh  ffh  ffh  00h
04b0h    00h  ffh  ffh  ffh  00h  ffh  00h  00h
04b8h    00h  00h  ffh  00h  00h  00h  00h  ffh
04c0h    ffh  00h  00h  00h  00h  ffh  00h  00h
04c8h    00h  00h  ffh  00h  ffh  ffh  ffh  00h
04d0h    ffh  ffh  ffh  ffh  ffh  ffh  ffh  ffh
04d8h    ffh  ffh  ffh  ffh  ffh  ffh  ffh  ffh
04e0h    ffh  00h  00h  00h  00h  ffh  00h  00h
04e8h    ffh  ffh  00h  ffh  00h  00h  00h  ffh
04f0h    ffh  ffh  ffh  ffh  ffh  ffh  ffh  ffh
04f8h    ffh  ffh  ffh  ffh  ffh  ffh  ffh  00h
```

```
000h denotes that 4 is not feature point.
0ffh denotes that 4 is a feature point.
```

16. A method according to claim 15, wherein the feature extracting operation is performed in a back and forth manner until two successive data thus obtained are identical.

17. A method according to any of claims 11 to 16, wherein the dual-value image data are first stored into the first temporary memory (5) such that when the system processes the first temporary memory, the next batch of data to processed can be stored into the second temporary memory (6) and that when the processing of the data in the second temporary memory is started after the processing of the data in the first temporary memory has been completed, the second next batch of data to be processed are strored into the first temporary memory, the process being thus repeated.

18. A method according to any of claims 11 to 17, wherein the binary picture data are divided into a plurality of blocks to be processed in batches, characterized in that overlapped portions are provided between two adjacent blocks, such that the thinning result can be corrected according to the data obtained from the overlapped portions.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATTERN RECOGNITION LETTERS, vol. 7, no. 2, February 1988, pages 99-106, Amsterdam, NL; Y.-S. CHEN et al.: "A modified fast parallel algorithm for thinning digital patterns" <br> * Page 101, left-hand column, lines 1-21; page 103, right-hand column, lines 3-17; figures 4a,b,c; page 104, lines 3-4 * | 1-6,11-12 | G 06 F 15/68 |
| A | IEEE INTERNATIONAL CONFERENCE ON ACOUSTICS, SPEECH AND SIGNAL PROCESSING, ICASSP'85, Tampa, Florida, 26th-29th March 1985, vol. 4, pages 1523-1526; M. DEL SORDO et al.: "A near-neighbor processor for line thinning" <br> * Page 1523, left-hand column, lines 7-13; page 1524, left-hand column, lines 24-28; figure 1 * | 1-6,11-12 | |
| A | US-A-4 742 552 (BOEING CO.) <br> * Figures 14a,b; column 1, lines 24-36,46-50; column 23, lines 57-68 * | 1,7 | TECHNICAL FIELDS SEARCHED (Int. Cl.5) <br><br> G 06 F 15/68 <br> G 06 K 9/44 |
| A | EP-A-0 189 943 (HITACHI) <br> * Page 15, line 8 - page 21, line 4 * | 1,9,10 | |

The present search report has been drawn up for all claims

| Place of search | Date of completion of the search | Examiner |
|---|---|---|
| THE HAGUE | 04-06-1990 | GONZALEZ ORDONEZ O. |